# EUROPEAN PATENT APPLICATION

(11) **EP 1 736 852 A2**
(43) Date of publication of application: **27.12.2006**
(21) Application number: 06009744.1
(22) Date of filing: 11.05.2006
(51) Int. Cl.: G06F 3/02

(54) **Half Keyboard**

(30) Priority: 21.06.2005 CN 200510079579
(71) Applicant: High Tech Computer Corp., Taoyuan City, Taoyuan Hsien (TW)
(72) Inventor: Wang, Yi-Shen, Taoyuan City Taoyuan Hsien (TW)
(74) Representative: Engelhard, Maximilian

(57) **Abstract**

A half keyboard having a key input system with a set of keys, wherein the set of keys is arranged as a conventional keyboard, such as a Qwerty keyboard, approximately folded in half so that the key of the set of keys indicates more multiple characters, symbols and/or functions.

## Description

### BACKGROUND

### Field of Invention

The present invention relates to a key input system. More particularly, the present invention relates to a key input system of a miniaturized keyboard arrangement adapted to a usage of a conventional Qwerty keyboard.

### Description of Related Art

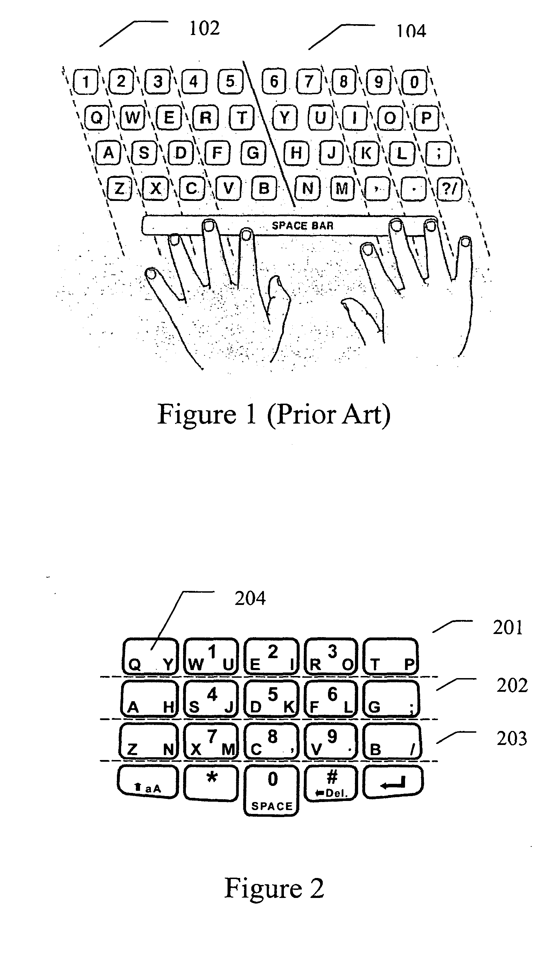

Figure 1 shows a standard input system of a conventional Qwerty keyboard. The Qwerty keyboard is the most well known and used by numerous users. The name "Qwerty" originates from the characteristic of the keyboard arrangement that firstly arranges six English letters in the order "Q, W, E, R, T, Y" from left to right.

When inputting English letters by the Qwerty keyboard, a user is used to commanding English letters "Q, W, E, R, T, A, S, D, F, G, Z, X, C, V, B" of the left side (102) in the keyboard by the left hand and commanding English letters "Y, U, I, O, P, H, J, K, L, N, M" of the right side (104) in the keyboard by the right hand. Because of frequent practice, skilled users can input the desired characters without looking at the keyboard. They are fluent in the arrangement of the Qwerty keyboard and command specific keys by specific fingers.

Particularly, the methods to improve input skill, such as expediting the input speed and accuracy, taught by some refresher courses and books are aimed at the Qwerty keyboard.

Moreover, input methods and software of many languages are also based on the arrangement of English letters on the Qwerty keyboard. For example, "Boshiamy Input Method Software" for inputting Chinese words directly adopts English letters shown on the Qwerty keyboard as notations to type without marking specified notations on the keyboard.

However, the sizes of many modern electronic devices, especially mobile ones, such as the cellular phone and PDA, are continually being miniaturized and so too are the areas to allocate keyboards. Therefore, factories provide many input systems of miniaturized keyboards. However, people have been accustomed to and rely on the Qwerty keyboard. When the miniaturized keyboards with the arrangements different from the Qwerty keyboard are presented, extreme difficulty arises because people have to find the position of each key and rehash their input customs.

For the foregoing reasons, there is a need for providing a key input system of an arrangement consistent with customs of traditional Qwerty keyboards in miniaturized keyboards to solve the above-mentioned inconvenience.

### SUMMARY

The present invention is directed to a key input system with a set of keys, wherein the set of keys are approximately arranged by folding an arrangement of a conventional keyboard, such as a Qwerty keyboard, to make the key represent more characters, symbols and/or functions.

The advantage of the present invention is that people can command different keys by their left hands and their right hands respectively, as they are used to do. The arrangement of the present invention can reduce the number of buttons in a keyboard and is adapted to input customs of conventional keyboards.

It is to be understood that both the foregoing general description and the following detailed description are by examples and are intended to provide further explanation of the invention as claimed.

### BRIEF DESCRIPTION OF THE DRAWINGS

The accompanying drawings are included to provide a further understanding of the invention and are incorporated in and constitute a part of this specification. The drawings illustrate embodiments of the invention and, together with the description, serve to explain the principles of the invention. In the drawings,
Figure 1 shows a standard input system of a conventional Qwerty keyboard;
Figure 2 shows a keyboard according to a preferred embodiment of the present invention;
Figure 3 illustrates an input usage of the left hand according to another preferred embodiment of the present invention;
Figure 4 illustrates an input usage of the right hand according to another preferred embodiment of the present invention;
Figure 5 illustrates an input usage of both left hand and right hand according to another preferred embodiment of the present invention; and
Figure 6 shows a keyboard with motion detectors according to a further preferred embodiment of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Figure 2 shows a keyboard according to a preferred embodiment of the present invention. The set of keys are approximately arranged by folding an arrangement of a conventional keyboard, such as a Qwerty keyboard to make the key represent more characters, symbols and/or functions, wherein the arrangement of the conventional keyboard are at least selected from the group consisting of English letters, phonetic notations, or the notations of various Chinese input methods, such as the Changjei input method and the Dayi input method.

For example, the set of keys in the arrangement of English letters comprise:
a first row of keys (201) including a first key indicative of Q and Y, a second key of W and U, a third key of E and I, a fourth key of R and O, and a fifth key of T and P;
a second row of keys (202) including a first key indicative of A and H, a second key of S and J, a third key of D and K, a fourth key of F and L, and a fifth key of G;
and a third row of keys (203) including a first key indicative of Z and N, a second key of X and M, a third key of C, a fourth key of V, and a fifth key of B.

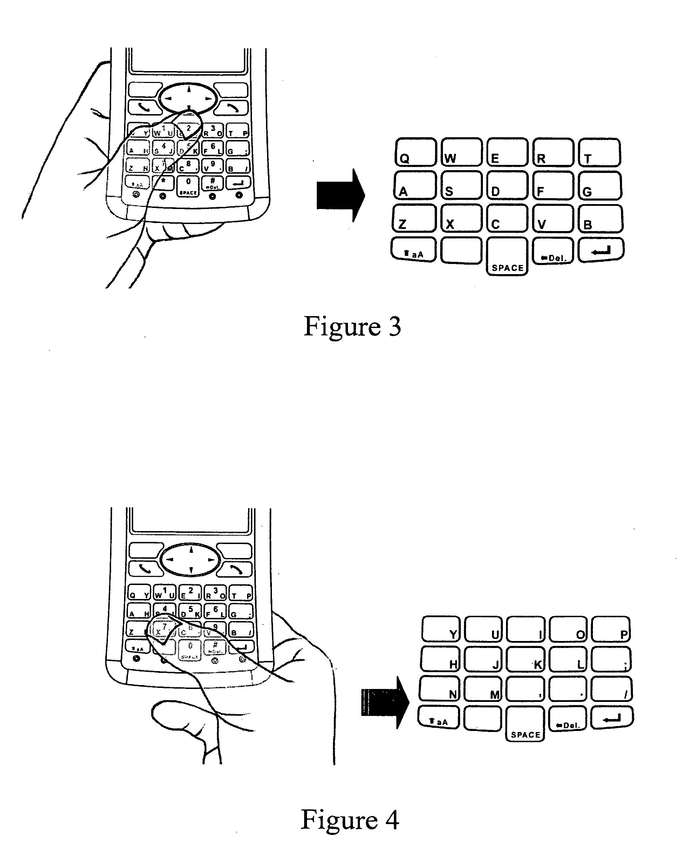

The above-mentioned arrangement advantageously reduces the number of buttons in a keyboard and is adapted to input customs of conventional keyboards. The input usages of the left hand and the right hand according to the present invention are illustrated respectively herein. Figure 3 illustrates an input usage of the left hand according to another preferred embodiment of Figure 2, wherein the arrangement of the keys is the same as the left portion of the Qwerty keyboard; and Figure 4 illustrates an input usage of the right hand according to another preferred embodiment of Figure 2, wherein the arrangement of the keys is the same as the right portion of the Qwerty keyboard.

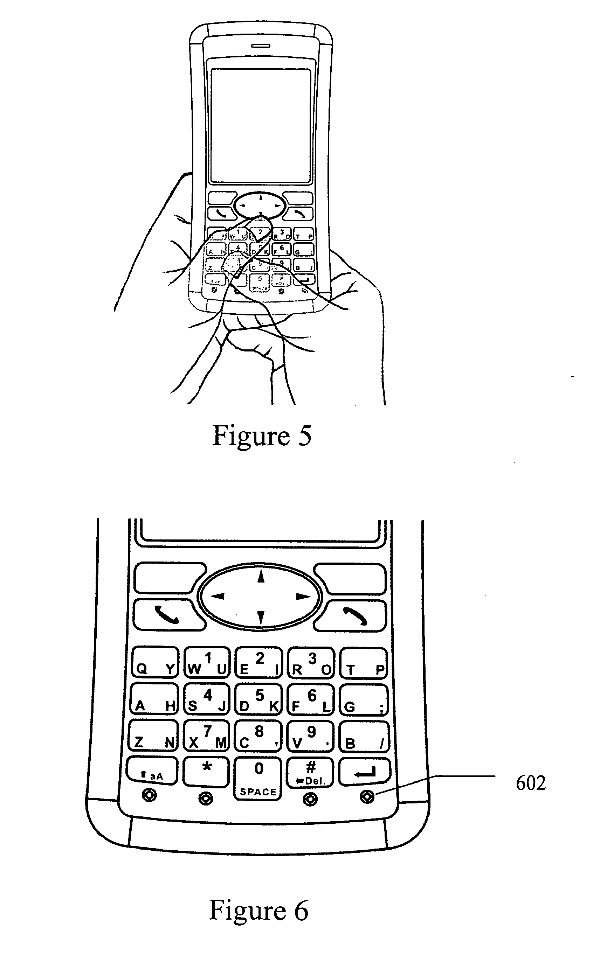

The arrangement of the set of keys in Figure 2 can be achieved by folding arrangements of the sets of keys in Figure 3 and Figure 4 in half. The input usage of the arrangement of the set of keys in Figure 2 is shown in Figure 5, wherein a user can use both hands in turns on a miniaturized keyboard without changing the custom to input by both hands.

In another preferred embodiment, besides the above-mentioned English letters, phonetic notations, and notations of the Changjei input method and the Dayi input method, the key of the set of keys can further indicate characters, symbols, or functions respectively, and the set of keys can comprise additional keys that indicate characters, symbols, or functions respectively, such as:
1, 2, 3, 4, 5, 6, 7, 8, 9, 0, ', ~, !, @, #, $, %, ^, &, *, (,), _, -, +, =, |, \, {, }, [, ], :, ;,",',<," ," , >, ., ?, / ; and
Menu, Esc, Tab, Caps Lock, Shift, Ctrl, Alt, Insert, Delete, Home, End, Page Up, Page Down, Print Screen, Scroll Lock, Pause Break, Number Lock, Space Bar.

In another preferred embodiment, when a key of the above-mentioned set of keys indicative of multiple characters, symbols or functions is pressed, an input can be decided as one of the multiple characters, symbols or functions depending on what side of the key is pressed. In another preferred embodiment, the input can also be decided by combining a functional "Shift" key.

Moreover, when a key of the above-mentioned set of keys indicative of multiple characters, symbols or functions is pressed, an input can be decided by recognizing how many times the key is pressed. For example, if a user presses a key indicative of both "Q" and "Y" once, "Q" is inputted; and if twice, "Y" is inputted.

In yet another preferred embodiment, when a key of the above-mentioned set of keys indicative of a character and a numeral is pressed, whether an input is decided as the character or the numeral can be based on an input condition. For example, if the input condition is the numeral field of a contact list and a user presses a key indicative of a character and a numeral, a numeral is inputted.

The set of keys of the present invention is suitable for physical keyboards, virtual keyboards displayed in monitors or virtual keyboards projected by optical devices, wherein the set of keys can comprise keys, push buttons, switch buttons, cam switches, rotary switches and scroll wheels.

Moreover, a user can use a smart input software, such as T9 text input software, to input by the set of keys of the present invention. The smart input software can predict the word that the user wants to input according to vocabularies stored in an input system when the user presses a series of the above-mentioned keys indicative of multiple characters, symbols or functions.

Figure 6 shows a keyboard with motion detectors according to a further preferred embodiment of the present invention. The motion detectors detect motions of hands of a user to determine whether the active hand is the left or right hand of the user, and it can assist the input system in determining characters, symbols or functions that the user wants to input. For example, regarding a key indicative of both "Q" and "Y' (204) shown in Figure 2, if the hand used to press the key is the left hand, the input system will determine the character that the user wants to input is "Q". Otherwise, if the hand used to press the key is the right hand, the input system will determine the character that the user wants to input is "Y".

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A key input system comprising a set of keys, wherein the set of keys are approximately arranged by folding an arrangement of a conventional keyboard to make the key indicative of more characters, symbols and/or functions.

2. The key input system of claim 1, wherein the arrangement of the conventional keyboard is at least selected from the group consisting of English letters, phonetic notations, and the notations of various Chinese input methods.

3. The key input system of claim 1, wherein the set of keys comprises additional keys indicative of characters, symbols, or functions of:
1, 2, 3, 4, 5, 6, 7, 8, 9, 0, ', ~, !, @, #, $, %, ^, &, *, (,), _, -, +, =, |, \, {,}, [,], :, ;, ", ', <, ", ", >, ., ?, / ; and
Menu, Esc, Tab, Caps Lock, Shift, Ctrl, Alt, Insert, Delete, Home, End, Page Up, Page Down, Print Screen, Scroll Lock, Pause Break, Number Lock, Space Bar.

4. The key input system of claim 1, wherein when a key of the set of keys indicative of multiple characters, symbols or functions is pressed, the input can be decided as one of the multiple characters, symbols or functions by at least one of recognizing a side of the key is pressed, incorporating a shift function key, recognizing times that the key is pressed, recognizing an input condition, or incorporating a smart input software.

5. The key input system of claim 1, wherein the set of keys is in one form of a physical keyboard, a virtual keyboard displayed in a monitor or a virtual keyboard projected by an optical device.

6. The key input system of claim 1, wherein the set of keys comprises keys, push buttons, switch buttons, cam switches, rotary switches and scroll wheels.

7. The key input system of claim 1, further comprising a motion detector that detects motions of the hands of a user to determine whether an active hand is a left hand or a right hand of a user and to assist in determining a character, a symbol or a function that the user wants to input when a key of the set of keys indicative of multiple characters, symbols or functions is pressed.

8. A key input system having a set of keys, the set of keys at least comprising:
a first row of keys sequentially including a first key indicative of Q and Y, a second key indicative of W and U, a third key indicative of E and I, a fourth key indicative of R and O, and a fifth key indicative of T and P;
a second row of keys sequentially including a first key indicative of A and H, a second key indicative of S and J, a third key indicative of D and K, a fourth key indicative of F and L, and a fifth key indicative of G; and
a third row of keys sequentially including a first key indicative of Z and N, a second key indicative of X and M, a third key indicative of C, a fourth key indicative of V, and a fifth key indicative of B.

9. The key input system of claim 8, wherein the set of keys comprises additional keys indicative of characters, symbols, or functions of:
1, 2, 3, 4, 5, 6, 7, 8, 9, 0, `, ~, !, @, #, $, %, ^, &, *, (,), _, -, +, =, |, \, {, }, [,],:,;,",',<, ",",>, ., ?,/ ; and
Menu, Esc, Tab, Caps Lock, Shift, Ctrl, Alt, Insert, Delete, Home, End, Page Up, Page Down, Print Screen, Scroll Lock, Pause Break, Number Lock, Space Bar.

10. The key input system of claim 8, wherein when a key of the set of keys indicative of multiple characters, symbols or functions is pressed, the input can be decided as one of the multiple characters, symbols or functions by at least one of recognizing a side of the key is pressed, incorporating a shift function key, recognizing times that the key is pressed, recognizing an input condition, or incorporating a smart input software.
